# EUROPEAN PATENT APPLICATION

(11) **EP 4 768 459 A1**
(43) Date of publication of application: **01.07.2026**
(21) Application number: 24876531.5
(22) Date of filing: 09.10.2024
(51) Int. Cl.: C04B 26/04, H02S 20/26, C04B 28/08

(54) **BUILDING-INTEGRATED PHOTOVOLTAICS SYSTEM AND PREPARATION METHOD**

(30) Priority: 10.10.2023 CN 202311306114
(71) Applicant: Phomi MCM Co., Ltd., Laibin, Guangxi 546199 (CN)
(72) Inventor: SHI, Lei, Guangzhou, Guangdong 510705 (CN); SHI, Rundong, Guangzhou, Guangdong 510705 (CN)
(74) Representative: Lapienis, Juozas
(86) International application number: PCT/CN2024/123574
(87) International publication number: WO 2025/077717

(57) **Abstract**

Disclosed in the present invention is a building-integrated photovoltaics system, comprising a back plate layer, a photovoltaic cell layer, and a facing layer from inside to outside. The facing layer comprises, in percentage by weight, 30-40% of a hydraulic material, 30-50% of natural calcium carbonate, 7-16% of an acrylic emulsion, 5-12% of glass fiber powder, 0.1-0.5% of a silane coupling agent, 0.1-0.5% of an acrylic light diffusing agent, and 5-20% of water. In the present invention, the building-integrated photovoltaics system is mounted on a building external wall, a building roof and a roof extension, can implement solar power generation, and is integrated with a building; external colors and patterns match the building; and the function of solar power generation is achieved while the aesthetics of the building is not damaged.

## Description

### CROSS-REFERENCE TO THE ERELATED APPLICATIONS

This is a national phase national application of an international patent application number PCT/CN2024/123574 with a filing date of October 09, 2024, which claimed priority of a foreign application number CN 2023113061144 with a filing date of October 10, 2023 in China. The contents of these specifications, including any intervening amendments thereto, are incorporated herein by reference.

### TECHNICAL FIELD

The present invention relates to the technical field of building decoration materials, in particular to a building-integrated photovoltaic system and a preparation method.

### BACKGROUND

The solar photovoltaic power generation technology, originating from the 1950s, uses energy coming from the sun. Compared with traditional power generation technologies, it basically does not produce CO₂ during the entire power generation process and will not cause pollution and damage to the natural ecological environment. As the current world energy situation becomes increasingly more severe, solar photovoltaic power generation has developed rapidly in recent years as one of the sustainable energy alternatives, and has also been applied to the building field.

At present, solar photovoltaic panels applied to the building field usually use EVA adhesive films to bond solar cells, that can convert solar energy into electrical energy, to back plates, and then use glass to encapsulate the solar cells by means of the EVA films. Typically, the solar photovoltaic panels are mounted outside the roof of a building by means of support devices. Since the solar cells of existing solar photovoltaic panels are generally blue or black, the solar photovoltaic panels, after being assembled on the roof of the building, mismatch external designs such as the shape and color of the building, which affects the aesthetics of the building and causes visual pollution to the building, thereby greatly limiting the application of the solar photovoltaic panels in the building field.

### SUMMARY

An objective of the present invention is to overcome the defect that solar photovoltaic panels in the prior art cannot be widely applied to the building field due to mismatches with the designs of buildings and provide a building-integrated photovoltaic system, which is mounted on a building external wall, a building roof and an awning roof, can implement solar power generation, is integrated with a building, with external colors and patterns matching the building, and achieves the function of solar power generation without spoiling the aesthetics of the building.

To fulfil the above objective, the present invention adopts the following technical solution:
A building-integrated photovoltaic system includes, from inside to outside, a back plate layer, a photovoltaic cell layer and a facing layer, where the facing layer includes, in percentage by weight, 30-40% of a hydraulic material, 30-50% of natural calcium carbonate, 7-16% of an acrylic emulsion, 5-12% of glass fiber powder, 0.1-0.5% of a silane coupling agent, 0.1-0.5% of an acrylic light diffusing agent, and 5-20% of water.

Further, the photovoltaic cell layer is fixed to the back plate layer by means of a first adhesive layer, and the facing layer is fixed to the photovoltaic cell layer by means of a second adhesive layer or is directly applied to the photovoltaic cell layer to be formed.

Further, the back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm.

Further, a pattern layer is arranged on a surface of the facing layer by spraying or printing, and the pattern layer has a thickness of 0.1-0.5 mm.

Further, a transparent abrasion-resistant layer is fixed to a surface of the pattern layer, and the transparent abrasion-resistant layer has a thickness of 0.2-1.5 mm.

Further, the hydraulic material has a granularity over 2000 meshes, the natural calcium carbonate has a granularity over 1000 meshes, a solid content of the acrylic emulsion is greater than 50%, the glass fiber powder has a granularity over 600 meshes, and the hydraulic material is one or a mixture of blast-furnace slag powder and rock phosphate powder.

Further, a surface, where the photovoltaic cell layer is bonded, of the facing layer is provided with light guide microgrooves, and a density of the light guide microgrooves distributed below a pattern region is greater than that the light guide microgrooves distributed below a pattern-free region.

Further, the back plate layer is a glass panel, an aluminum veneer, an aluminum honeycomb panel, an aluminum composite panel, a high-density fiber cement board or a high-density insulation board; the photovoltaic cell layer is a monocrystalline silicon photovoltaic cell, a polycrystalline silicon photovoltaic cell or a thin-film photovoltaic cell.

The present invention further provides a preparation method for the building-integrated photovoltaic system, including the following steps:
applying a layer of adhesive to a back plate layer to form a first adhesive layer; then, disposing a photovoltaic cell layer on the first adhesive layer, and gently pressing a periphery of the photovoltaic cell layer to fix the photovoltaic cell layer to the first adhesive layer; next, fixing a facing layer to the photovoltaic cell layer by:
applying a layer of adhesive to the photovoltaic cell layer to form a second adhesive layer; and then, disposing the facing layer on the second adhesive layer, and gently pressing a periphery of the facing layer to fix the second layer to the second adhesive layer, where the facing layer is formed by injecting a facing layer slurry into a mold, laying a layer of semi-transparent fiber cloth on a surface of the facing layer slurry, and baking the facing layer slurry at a temperature of 90-150°C for 20-60 min for curing; or,
applying the facing layer slurry to the photovoltaic cell layer; and then, baking the facing layer slurry at a temperature of 90-150°C for 20-60 min for curing;
where, the facing layer slurry is prepared by: first, dispersing glass fibers in water; then, adding an acrylic light diffusing agent and a silane coupling agent, heating to 50-60°C, and stirring and reacting for 10-20 min; then, adding a hydraulic material and natural calcium carbonate, and stirring and holding the temperature for 10-20 min; and cooling to a normal temperature, and adding an acrylic emulsion to prepare the slurry.

According to the preparation method for the building-integrated photovoltaic system, a pattern layer is printed or sprayed on the facing layer, light guide microgrooves are engraved in a back of the facing layer by laser engraving, and a density the light guide microgrooves distributed below a pattern region is greater than that of the light guide microgrooves distributed below a pattern-free region; after the facing layer is fixed to the second adhesive layer, a layer of transparent abrasion-resistant emulsion is applied to a surface of the pattern layer to form a transparent abrasion-resistant layer.

A bottom of the mold is provided with uneven grain, the facing layer slurry is injected into the mold to form a slurry layer with a uniform thickness, filling the concave portions with a transparent adhesive so that the height of the concave portions becomes flush with the convex portions.

Compared with the prior art, the present invention has the following beneficial effects:
The building-integrated photovoltaic system provided by the present invention uses the facing layer, that is mainly prepared from inorganic powder, to replace an existing tempered glass layer, and the facing layer, formed by slurrying and curing the hydraulic material (such as blast-furnace slag powder and rock phosphate powder) and the inorganic powder (such as natural calcium carbonate) with the acrylic emulsion, is light-transmitting, such that the facing layer not only can serve as a decorative surface layer of a building, but also can cover the surface of the photovoltaic cell layer to conceal the shape and color of the photovoltaic cell layer; the surface of the facing layer may be printed with patterns or designed with grains according to the building to integrate photovoltaic panels with the building, such that the defect that the aesthetics of a building is affected by photovoltaic panels mounted on the building in the prior art is overcome; the hydraulic material, as an active inorganic powder material, has the function of gradual activation and after being adhered to a matrix, can better fit the matrix and be hardened with time, such that the adhesion of the facing layer will be greater with time after the facing layer is adhered to the photovoltaic cell layer. Therefore, on the basis of the structure of existing photovoltaic panels, the facing layer may be bonded onto the photovoltaic cell layer to cover the photovoltaic cell layer, such that the defect that it is difficult to integrate an existing photovoltaic cell with a building because tempered glass on the photovoltaic cell layer cannot conceal the color of the photovoltaic cell layer is overcome.

In the present invention, glass fiber powder is added to the facing layer, and surface treatment is performed on the glass fiber powder with the silane coupling agent to be easily bonded with the hydraulic material and the natural calcium carbonate to form a sheet material with uniform light-transmitting performance; the acrylic light diffusing agent enables, sunlight entering from the surface of the facing layer of the photovoltaic cell, to be scattered in the facing layer of the photovoltaic cell to be converted into a surface light source, such that the overall uniform light-transmitting performance of the facing layer is improved, and portions exposed to less light can also transmit light to ensure that a set of cells of the photovoltaic cell layer covered with the facing layer generates power normally, thereby guaranteeing the photoelectric conversion efficiency of the whole photovoltaic cell layer.

Although the light transmittance of the facing layer satisfies the demand of the photovoltaic cell layer, the light-transmitting performance of the pattern region will be decreased after the surface of the facing layer is printed or sprayed with patterns. In the present invention, the light guide microgrooves are more densely arranged below the pattern region, and part of sunlight can be scattered in different directions in the facing layer, such that photovoltaic conversion may be implemented below the pattern region by means of light scattered by the patter-free region, thereby guaranteeing the overall photoelectric conversion efficiency of the photovoltaic cell layer.

In the present invention, the facing layer has good aging resistance, is made from recyclable materials, is environmentally friendly and has with high design versatility, the facing layer may be designed with matching grains according to the shape and style of a building, and according to the desired grains, the surface of the facing layer may be printed or sprayed with patterns to be integrated with the building.

### BRIEF DESCRIPTION OF THE DRAWINGS

To more clearly describe the technical solutions in the embodiments of the present invention, drawings used for describing the embodiments are briefly introduced below.
FIG. 1 is a schematic structural diagram of a building-integrated photovoltaic system according to the present invention.
FIG. 2 is another schematic structural diagram of a facing layer of the building-integrated photovoltaic system according to the present invention.

### DETAILED DESCRIPTION OF THE EMBODIMENTS

The embodiments of the present invention are described in detail below. Examples of the embodiments are shown in the accompanying drawings, wherein identical or similar reference signs indicate identical or similar elements or elements with identical or similar functions. The embodiments described below with reference to the accompanying drawings are illustrative, intend to explain the present invention and should not be construed as limitations of the present invention.

In the description of the present invention, it should be understood that terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial" and "circumferential" are used to indicate directional or positional relations on the basis of the accompanying drawings merely for the purpose of facilitating and simplifying the description of the present invention, do not indicate or imply that devices or elements referred to must be in a specific direction or be configured and operated in a specific direction, and thus should not be construed as limitations of the present invention.

In addition, terms "first" and "second" are merely for the purpose of description and should not be construed as indicating or implying relative importance or implicitly indicating the number of technical features referred to. A feature defined by "first" or "second" may explicitly or implicitly indicate the inclusion of at least one said feature. In the description of the present invention, "multiple" refers to at least two such as two or three, unless otherwise expressly defined.

In the present invention, unless otherwise expressly stated and defined, terms such as "mount", "link", "connect" and "fix" should be understood in a broad sense. For example, "connect" may refer to fixed connection, detachable connection or integrated connection; mechanical connection or electrical connection; direct connection, indirect connection by means of an intermediate medium, or internal communication of two elements, or interaction of two elements. Those ordinarily skilled in the art may appreciate the specific meanings of these terms in the present invention according to specific circumstances.

In the present invention, unless otherwise expressly stated and defined, the term "comprise" or "has" aims to indicate the presence of a specific feature, quantity, step, operation, element, part or a combination thereof, and does not exclude the presence or addition of one or more other features, quantities, steps, operations, elements, parts or combinations thereof.

An embodiment of the present invention provides a building-integrated photovoltaic system, which uses a facing layer, a surface of which may be printed with patterns or provided with uneven grains, to replace a tempered glass surface layer in existing photovoltaic panels, so as to integrate the photovoltaic panels with a building. In this embodiment, the facing layer is formed by heating and curing an acrylic polymer emulsion, a hydraulic material, natural calcium carbonate, a silane coupling agent, water, glass fiber powder and an acrylic light diffusing agent, which are used as main raw materials. In the forming process, a mold provided with uneven grains may be used for curing and formation; the formed facing layer is soft, and the surface of the facing layer may be printed with patterns. A further detailed description is provided below with reference to specific examples.

### Example 1

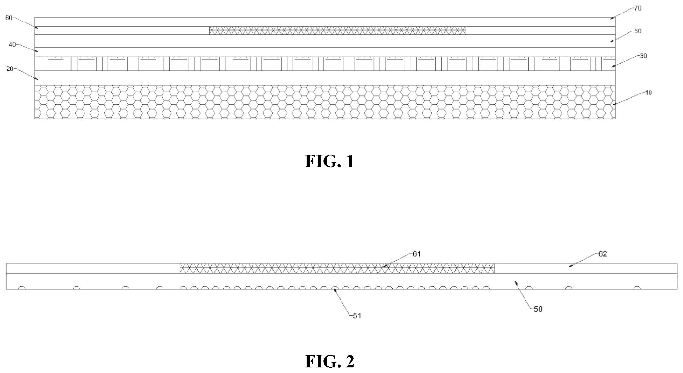

Referring to FIG. 1 which shows the structure of a building-integrated photovoltaic system in this example, the building-integrated photovoltaic system in this example includes, from inside to outside, a back plate layer 10, a photovoltaic cell layer 30 and a facing layer 50. The photovoltaic cell layer 30 is fixed to the back plate layer 10 by means of a first adhesive layer 20. The facing layer 50 is fixed to the photovoltaic cell layer 30 by means of a second adhesive layer 40. The back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm. A pattern layer 60 is arranged on a surface of the facing layer 50 by spraying or printing, and the pattern layer 60 has a thickness of 0.1-0.5 mm. A transparent abrasion-resistant layer 70 is fixed to a surface of the pattern layer, and the transparent abrasion-resistant layer 70 has a thickness of 0.2-1.5 mm.

In this example, the back plate layer 10 is an aluminum honeycomb panel. The first adhesive layer 20 and the second adhesive layer 40 are EVA adhesive layers. The photovoltaic cell layer is a monocrystalline silicon photovoltaic cell. The transparent abrasion-resistant layer 70 is formed by applying a commercially available ultra-thin transparent anticorrosive paint to the surface of the pattern layer 60. The ultra-thin transparent anticorrosive paint prepared by adding an acrylic emulsion, serving as an adhesive, to inorganic powder serving as a main component and has the characteristics of flame retardance, high hardness, abrasion resistance, and acid and alkali resistance.

In this example, the facing layer includes, in percentage by weight, 35% of blast-furnace slag powder, 40% of natural calcium carbonate, 10% of an acrylic emulsion, 6% of glass fiber powder, 0.2% of a silane coupling agent, 0.2% of an acrylic light diffusing agent, and 8.6% of water. The blast-furnace slag powder has a granularity over 2000 meshes, the natural calcium carbonate has a granularity over 1000 meshes, a solid content of the acrylic emulsion is greater than 50%, and the glass fiber powder has a granularity over 600 meshes. A surface, where the photovoltaic cell layer 30 is bonded, of the facing layer 50 is provided with light guide microgrooves 51, and the density of the light guide microgrooves distributed below a pattern region 61 is greater than that of the light guide microgrooves distributed below a pattern-free region 62.

A preparation method for the building-integrated photovoltaic system in this example includes the following steps:

A layer of adhesive is applied to the back plate layer 10 to form the first adhesive layer 20; then, the photovoltaic cell layer 30 is disposed on the first adhesive layer 20, and the periphery of the photovoltaic cell layer is gently pressed to fix the photovoltaic cell layer to the first adhesive layer; next, a layer of adhesive is applied to the photovoltaic cell layer to form the second adhesive layer; and then, the facing layer is disposed on the second adhesive layer, and the periphery of the facing layer is gently pressed to fix the second layer to the second adhesive layer.

The facing layer is prepared by: first, dispersing glass fibers in water; then, adding the acrylic light diffusing agent and the silane coupling agent, heating to 50-60°C, and stirring and reacting for 10-20 min; then, adding the blast-furnace slag powder and the natural calcium carbonate, stirring and holding the temperature for 10-20 min, and cooling to a normal temperature, and adding the acrylic emulsion to prepare a slurry; injecting the slurry into a mold, and laying a layer of semi-transparent fiber cloth on a surface of the slurry to integrate the semi-transparent fiber cloth fused and the slurry; and baking the slurry at a temperature of 140-150°C for 20-30 min for curing, and then performing demolding.

According to the preparation method for the building-integrated photovoltaic system in this example, the pattern layer is printed or sprayed on the surface of the facing layer obtained after demolding, the light guide microgrooves are engraved in a back of the facing layer by laser engraving, and the density the light guide microgrooves distributed below the pattern region is greater than that of the light guide microgrooves distributed below the pattern-free region; after the facing layer is fixed to the second adhesive layer, a layer of transparent abrasion-resistant emulsion is applied to a surface of the pattern layer to form the transparent abrasion-resistant layer.

### Example 2

A building-integrated photovoltaic system structurally includes, from inside to outside, a back plate layer, a photovoltaic cell layer and a facing layer.

The photovoltaic cell layer is fixed to the back plate layer by means of a first adhesive layer. The facing layer is fixed to the photovoltaic cell layer by means of a second adhesive layer 40. The back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm.

In this example, the back plate layer is a glass panel. The photovoltaic cell layer is a monocrystalline silicon photovoltaic cell. The first adhesive layer and the second adhesive layer are EVA adhesive layers.

In this example, the facing layer includes, in percentage by weight, 30% of rock phosphate powder, 50% of natural calcium carbonate, 9.4% of an acrylic emulsion, 5% of glass fiber powder, 0.5% of a silane coupling agent, 0.1% of an acrylic light diffusing agent, and 5% of water. The rock phosphate powder has a granularity over 2000 meshes, the natural calcium carbonate has a granularity over 1000 meshes, a solid content of the acrylic emulsion is greater than 50%, and the glass fiber powder has a granularity over 600 meshes.

A preparation method for the building-integrated photovoltaic system in this example includes the following steps:
A layer of adhesive is applied to the back plate layer to form the first adhesive layer; then, the photovoltaic cell layer is disposed on the first adhesive layer 20, and the periphery of the photovoltaic cell layer is gently pressed to fix the photovoltaic cell layer to the first adhesive layer; next, a layer of adhesive is applied to the photovoltaic cell layer to form the second adhesive layer; and then, the facing layer is disposed on the second adhesive layer, and the periphery of the facing layer is gently pressed to fix the second layer to the second adhesive layer.

The facing layer is prepared by: first, dispersing glass fibers in water; then, adding the acrylic light diffusing agent and the silane coupling agent, heating to 50-60°C, and stirring and reacting for 10-20 min; then, adding the rock phosphate powder and the natural calcium carbonate, stirring and holding the temperature for 10-20 min, cooling to a normal temperature, and adding the acrylic emulsion to prepare a slurry; injecting the slurry into a mold provided with uneven grains at the bottom, forming a slurry layer with a uniform thickness at the bottom of the mold after the slurry is injected into the mold, filling concave portions with a transparent adhesive so that the height of the concave portions becomes flush with the convex portions, and laying a layer of semi-transparent fiber cloth on a surface of the slurry to integrate the semi-transparent fiber cloth and the slurry; and baking the slurry at a temperature of 120-130°C for 30-40 min for curing, and then performing demolding. The clear adhesive is transparent EVA.

### Example 3

A building-integrated photovoltaic system includes, from inside to outside, a back plate layer, a photovoltaic cell layer and a facing layer.

The photovoltaic cell layer is fixed to the back plate layer by means of a first adhesive layer. The facing layer is formed by curing a facing layer slurry applied to the photovoltaic cell layer. The back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm. A pattern layer is arranged on a surface of the facing layer by spraying or printing, and the pattern layer has a thickness of 0.1-0.5 mm.

In this example, the back plate layer is a high-density fiber cement board. The photovoltaic cell layer is a monocrystalline silicon photovoltaic cell. The first adhesive layer and the second adhesive layer are EVA adhesive layers.

In this example, the facing layer includes, in percentage by weight, 40% of rock phosphate powder, 30% of natural calcium carbonate, 16% of an acrylic emulsion, 7.5% of glass fiber powder, 0.5% of a silane coupling agent, 0.3% of an acrylic light diffusing agent, and 5.7% of water. The rock phosphate powder has a granularity over 2000 meshes, the natural calcium carbonate has a granularity over 1000 meshes, a solid content of the acrylic emulsion is greater than 50%, and the glass fiber powder has a granularity over 600 meshes.

A preparation method for the building-integrated photovoltaic system in this example includes the following steps:

A layer of adhesive is applied to the back plate layer 10 to form the first adhesive layer 20; then, the photovoltaic cell layer 30 is disposed on the first adhesive layer 20, and the periphery of the photovoltaic cell layer is gently pressed to fix the photovoltaic cell layer to the first adhesive layer; next, a facing layer slurry is applied to the photovoltaic cell layer and cured; and then, patterns are sprayed/printed on the facing layer.

The facing layer slurry is prepared by: first, first, dispersing glass fibers in water; then, adding the acrylic light diffusing agent and the silane coupling agent, heating to 50-60°C, and stirring and reacting for 10-20 min; then, adding the rock phosphate powder and the natural calcium carbonate, and stirring and holding the temperature for 10-20 min; and cooling to a normal temperature, and adding the acrylic emulsion to prepare the slurry.

After the facing layer slurry is applied to a surface of the photovoltaic cell layer, the slurry is baked at a temperature of 90-110°C for 50-60 min to be cured, and then demolding is performed.

Before the facing layer slurry is applied to the photovoltaic cell layer, a layer of semi-transparent fiber mesh may be laid on the surface of the photovoltaic cell layer.

### Example 4

A building-integrated photovoltaic system includes, from inside to outside, a back plate layer, a photovoltaic cell layer and a facing layer. The photovoltaic cell layer is fixed to the back plate layer by means of a first adhesive layer. The facing layer is fixed to the photovoltaic cell layer by means of a second adhesive layer. The back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm. A pattern layer is arranged on a surface of the facing layer by spraying or printing, and the pattern layer has a thickness of 0.1-0.5 mm.

In this example, the back plate layer is an aluminum veneer. The photovoltaic cell layer is a monocrystalline silicon photovoltaic cell. The first adhesive layer and the second adhesive layer are EVA adhesive layers.

In this example, the facing layer includes, in percentage by weight, 33% of blast-furnace slag powder, 32% of natural calcium carbonate, 7% of an acrylic emulsion, 10% of glass fiber powder, 0.4% of a silane coupling agent, 0.4% of an acrylic light diffusing agent, and 17.2% of water. The blast-furnace slag powder has a granularity over 2000 meshes, the natural calcium carbonate has a granularity over 1000 meshes, a solid content of the acrylic emulsion is greater than 50%, and the glass fiber powder has a granularity over 600 meshes. A surface, where the photovoltaic cell layer 30 is bonded, of the facing layer 50 is provided with light guide microgrooves 51, and the density of the light guide microgrooves distributed below a pattern region is greater than that of the light guide microgrooves distributed below a pattern-free region.

A preparation method for the building-integrated photovoltaic system in this example includes the following steps:
A layer of adhesive is applied to the back plate layer to form the first adhesive layer; then, the photovoltaic cell layer is disposed on the first adhesive layer, and the periphery of the photovoltaic cell layer is gently pressed to fix the photovoltaic cell layer to the first adhesive layer; next, a layer of adhesive is applied to the photovoltaic cell layer to form the second adhesive layer; and then, the facing layer is disposed on the second adhesive layer, and the periphery of the facing layer is gently pressed to fix the second layer to the second adhesive layer.

The facing layer is prepared by: first, dispersing glass fibers in water; then, adding the acrylic light diffusing agent and the silane coupling agent, heating to 50-60°C, and stirring and reacting for 10-20 min; then, adding the blast-furnace slag powder and the natural calcium carbonate, stirring and holding the temperature for 10-20 min, cooling to a normal temperature, and adding the acrylic emulsion to prepare a slurry; injecting the slurry into a mold, and laying a layer of semi-transparent fiber cloth on a surface of the slurry to integrate the semi-transparent fiber cloth and the slurry; and baking the slurry at a temperature of 140-150°C for 20-30 min for curing, and then performing demolding. The pattern layer is printed or sprayed on the surface of the facing layer obtained after demolding, the light guide microgrooves are engraved in a back of the facing layer by laser engraving, and the density of the light guide microgrooves distributed below the pattern region is greater than that of the light guide microgrooves distributed below the pattern-free region.

### Example 5

A building-integrated photovoltaic system includes, from inside to outside, a back plate layer, a photovoltaic cell layer and a facing layer. The photovoltaic cell layer is fixed to the back plate layer by means of a first adhesive layer. The facing layer is fixed to the photovoltaic cell layer by means of a second adhesive layer. The back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm. A pattern layer is arranged on a surface of the facing layer by spraying or printing, and the pattern layer has a thickness of 0.1-0.5 mm.

In this example, the back plate layer is a high-density insulation board. The photovoltaic cell layer is a monocrystalline silicon photovoltaic cell. The first adhesive layer and the second adhesive layer are EVA adhesive layers.

In this example, the facing layer includes, in percentage by weight, 38% of blast-furnace slag powder, 30% of natural calcium carbonate, 12% of an acrylic emulsion, 12% of glass fiber powder, 0.1% of a silane coupling agent, 0.5% of an acrylic light diffusing agent, and 7.4% of water. The blast-furnace slag powder has a granularity over 2000 meshes, the natural calcium carbonate has a granularity over 1000 meshes, a solid content of the acrylic emulsion is greater than 50%, and the glass fiber powder has a granularity over 600 meshes. A surface, where the photovoltaic cell layer 30 is bonded, of the facing layer 50 is provided with light guide microgrooves 51, and the density of the light guide microgrooves distributed below a pattern region is greater than that of the light guide microgrooves distributed below a pattern-free region, as shown in FIG. 2.

A preparation method for the building-integrated photovoltaic system in this example includes the following steps:
A layer of adhesive is applied to the back plate layer to form the first adhesive layer; then, the photovoltaic cell layer is disposed on the first adhesive layer, and the periphery of the photovoltaic cell layer is gently pressed to fix the photovoltaic cell layer to the first adhesive layer; next, a layer of adhesive is applied to the photovoltaic cell layer to form the second adhesive layer; and then, the facing layer is disposed on the second adhesive layer, and the periphery of the facing layer is gently pressed to fix the second layer to the second adhesive layer.

The facing layer is prepared by: first, dispersing glass fibers in water; then, adding the acrylic light diffusing agent and the silane coupling agent, heating to 50-60°C, and stirring and reacting for 10-20 min; then, adding the blast-furnace slag powder and the natural calcium carbonate, stirring and holding the temperature for 10-20 min, cooling to a normal temperature, and adding the acrylic emulsion to prepare a slurry; injecting the slurry into a mold, and laying a layer of semi-transparent fiber cloth on a surface of the slurry to integrate the semi-transparent fiber cloth and the slurry; and baking the slurry at a temperature of 110-120°C for 35-40 min for curing, and then performing demolding. The pattern layer is printed or sprayed on the surface of the facing layer obtained after demolding, the light guide microgrooves are engraved in a back of the facing layer by laser engraving, and the density of the light guide microgrooves distributed below the pattern region is greater that of the light guide microgrooves distributed below the pattern-free region.

### Performance test:

(1) Test groups: the building-integrated photovoltaic systems in Examples 1-5 were used as test groups; a commercially available photovoltaic panel (using a monocrystalline silicon cell as a photovoltaic cell layer was and having a surface packaged with tempered glass) was used as a control group.
(2) Artificial aging resistance test: an artificial aging resistance test was carried out in accordance with GB/T 16259.
(3) Photoelectric conversion efficiency: the photoelectric conversion efficiency was tested in accordance with GB/T 34160.
(4) Test results: see Table 1

**Table 1 Test results of the test groups and the control group**

| Performance | Test group 1 | Test group 2 | Test group 3 | Test group 4 | Test group 5 | Control group |
|---|---|---|---|---|---|---|
| Artificial aging resistance time (h) | 2000 | 2000 | 2000 | 2000 | 2000 | 508 |
| Photoelectric conversion efficiency (%) | 18 | 17 | 13 | 17 | 16 | 21 |

It can be seen, from Table 1, that compared with existing photovoltaic panels packaged with tempered glass, the overall aging resistance of the building-integrated photovoltaic system provided by the present invention is improved by about 4 times, and the service life is greatly prolonged, thereby saving the use cost for users and facilitating application and popularization. In addition, the facing layer of the building-integrated photovoltaic system provided by the present invention may be printed or sprayed with patterns, and compared with existing photovoltaic panels, the building-integrated photovoltaic system may be integrated with a building without spoiling the aesthetics of the building.

In the building-integrated photovoltaic system provided by the present invention, the facing layer uses the glass fiber powder and the acrylic light diffusing agent to enable light to be uniformly distributed in the facing layer, such that the overall photovoltaic conversion capacity of the entire building-integrated photovoltaic system is improved; moreover, after the facing layer is printed or sprayed with patterns, the light guide microgrooves are designed and distributed to guarantee high photovoltaic conversion efficiency after the surface of the facing layer is printed or sprayed with the patterns, such that the power generation capacity of the building-integrated photovoltaic system is not affected.

(5) After artificial aging was performed on the test groups and the control group respectively for 500 h and 1000 h, the photoelectric conversion efficiency was tested. Test results are shown in Table 2.

**Table 2 Photoelectric conversion efficiency after artificial aging (%)**

| Performance | Test group 1 | Test group 2 | Test group 3 | Test group 4 | Test group 5 | Control group |
|---|---|---|---|---|---|---|
| 500h | 18 | 17 | 13 | 17 | 16 | 13 |
| 1000h | 15 | 14 | 8 | 14 | 14 | 5 |

It may be seen, from Table 2, that compared with existing photovoltaic panels, the weatherability of the building-integrated photovoltaic system provided by the present invention is greatly improved, such that the photovoltaic conversion capacity may be maintained stable and high with time in use, and with the increase in the service time, the advantages of the building-integrated photovoltaic system against existing photovoltaic panels will be more remarkable. The building-integrated photovoltaic system provided by the present invention may satisfy the requirement for long-term use.

In the description of the specification, expressions such as "one embodiment", "some embodiments", "example", "specific example" and "some examples" intend to indicate that specific features, structures, materials or characteristics described in conjunction with said embodiment or example are included in at least one embodiment or example of the present invention. In the specification, schematic expressions of these terms do not definitely refer to identical embodiments or examples. Moreover, the specific features, structures, materials or characteristics described may be combined appropriately in any one or more embodiments or examples. In addition, those skilled in the art may integrate and combine different embodiments or examples and features in different embodiments or examples described in the specification without any contradictions.

Although the embodiments of the present invention have been illustrated and described above, it is understandable that the above embodiments are illustrative and should not be construed as limitations of the present invention. Those ordinarily skilled in the art may make transformations, amendments, substitutions and modifications to the above embodiments within the scope of the present invention.

## Claims

1. A building-integrated photovoltaic system, comprising, from inside to outside, a back plate layer, a photovoltaic cell layer and a facing layer, wherein the facing layer comprises, in percentage by weight, 30-40% of a hydraulic material, 30-50% of natural calcium carbonate, 7-16% of an acrylic emulsion, 5-12% of glass fiber powder, 0.1-0.5% of a silane coupling agent, 0.1-0.5% of an acrylic light diffusing agent, and 5-20% of water.

2. The building-integrated photovoltaic system according to claim 1, wherein the photovoltaic cell layer is fixed to the back plate layer by means of a first adhesive layer, and the facing layer is fixed to the photovoltaic cell layer by means of a second adhesive layer or is directly applied to the photovoltaic cell layer to be formed.

3. The building-integrated photovoltaic system according to claim 2, wherein the back plate layer has a thickness of 2-10 mm, the first adhesive layer and the second adhesive layer have a thickness of 0.1-1 mm, the photovoltaic cell layer has a thickness of 0.1-1 mm, and the facing layer has a thickness of 0.1-3 mm.

4. The building-integrated photovoltaic system according to claim 3, wherein a surface of the facing layer is provided with uneven grains, and backs of concave portions of the surface are filled with transparent filler blocks.

5. The building-integrated photovoltaic system according to claim 1, wherein a pattern layer is arranged on a surface of the facing layer by spraying or printing, and the pattern layer has a thickness of 0.1-0.5 mm.

6. The building-integrated photovoltaic system according to claim 5, wherein a transparent abrasion-resistant layer is fixed to a surface of the pattern layer, and the transparent abrasion-resistant layer has a thickness of 0.2-1.5 mm.

7. The building-integrated photovoltaic system according to claim 5, wherein a surface, where the photovoltaic cell layer is bonded, of the facing layer is provided with light guide microgrooves, and a density of the light guide microgrooves distributed below a pattern region is greater than that the light guide microgrooves distributed below a pattern-free region.

8. The building-integrated photovoltaic system according to claim 1, wherein the hydraulic material has a granularity over 2000 meshes, the natural calcium carbonate has a granularity over 1000 meshes, a solid content of the acrylic emulsion is greater than 50%, the glass fiber powder has a granularity over 600 meshes, and the hydraulic material is one or a mixture of blast-furnace slag powder and rock phosphate powder.

9. The building-integrated photovoltaic system according to claim 1, wherein the back plate layer is a glass panel, an aluminum veneer, an aluminum honeycomb panel, an aluminum composite panel, a high-density fiber cement board or a high-density insulation board; the photovoltaic cell layer is a monocrystalline silicon photovoltaic cell, a polycrystalline silicon photovoltaic cell or a thin-film photovoltaic cell.

10. A preparation method for the building-integrated photovoltaic system according to any one of claims 1-9, comprising the following steps:
applying a layer of adhesive to a back plate layer to form a first adhesive layer; then, disposing a photovoltaic cell layer on the first adhesive layer, and gently pressing a periphery of the photovoltaic cell layer to fix the photovoltaic cell layer to the first adhesive layer; next, fixing a facing layer to the photovoltaic cell layer by:
applying a layer of adhesive to the photovoltaic cell layer to form a second adhesive layer; and then, disposing the facing layer on the second adhesive layer, and gently pressing a periphery of the facing layer to fix the second layer to the second adhesive layer, wherein the facing layer is formed by injecting a facing layer slurry into a mold, laying a layer of semi-transparent fiber cloth on a surface of the facing layer slurry, and baking the facing layer slurry at a temperature of 90-150°C for 20-60 min for curing; or,
applying the facing layer slurry to the photovoltaic cell layer; and then, baking the facing layer slurry at a temperature of 90-150°C for 20-60 min for curing;
wherein, the facing layer slurry is prepared by: first, dispersing glass fibers in water; then, adding an acrylic light diffusing agent and a silane coupling agent, heating to 50-60°C, and stirring and reacting for 10-20 min; then, adding a hydraulic material and natural calcium carbonate, and stirring and holding the temperature for 10-20 min; and cooling to a normal temperature, and adding an acrylic emulsion to prepare the slurry.

11. The preparation method for the building-integrated photovoltaic system according to claim 10, wherein a pattern layer is printed or sprayed on the facing layer, light guide microgrooves are engraved in a back of the facing layer by laser engraving, and a density of the light guide microgrooves distributed below a pattern region is greater than that of the light guide microgrooves distributed below a pattern-free region; after the facing layer is fixed to the second adhesive layer, a layer of transparent abrasion-resistant emulsion is applied to a surface of the pattern layer to form a transparent abrasion-resistant layer.

12. The preparation method for the building-integrated photovoltaic system according to claim 10, wherein a bottom of the mold is provided with uneven grain, the facing layer slurry is injected into the mold to form a slurry layer with a uniform thickness, and filling the concave portions with a transparent adhesive so that the height of the concave portions becomes flush with the convex portions.
